# EUROPÄISCHE PATENTANMELDUNG

(11) **EP 2 353 695 A1**
(43) Veröffentlichungstag der Anmeldung: **10.08.2011**
(21) Anmeldenummer: 11152517.6
(22) Anmeldetag: 28.01.2011
(51) Int. Cl.: B01D 46/00, F01M 13/04

(54) **Vorrichtung und Verfahren zur Abscheidung von Ölpartikeln aus Kurbelgehäuseentlüftungsanlagen**

(30) Priorität: 03.02.2010 DE 102010006652
(71) Anmelder: Polytec Riesselmann GmbH & Co. KG, 49393 Lohne (DE)
(72) Erfinder: Soares, Jorge, 48493, Wettringen (DE); Meyer, Christian, 49377, Vechta (DE)
(74) Vertreter: von Kreisler Selting Werner

(57) **Zusammenfassung**

Die vorliegende Erfindung betrifft eine Vorrichtung zur Entölung von Gasgemischen sowie ein Verfahren zur Abscheidung von Öl aus Gasgemischen. Insbesondere im Kraftfahrzeugbereich bei der Ölabscheidung aus Kurbelgehäuseentlüftungsgasen findet eine erfindungsgemäße Vorrichtung Anwendung.

## Beschreibung

Die vorliegende Erfindung betrifft eine Vorrichtung zur Entölung von Gasgemischen sowie ein Verfahren zur Abscheidung von Öl aus Gasgemischen. Insbesondere im Kraftfahrzeugbereich bei der Ölabscheidung aus Kurbelgehäuseentlüftungsgasen findet eine erfindungsgemäße Vorrichtung Anwendung.

Vor allem im Kraftfahrzeugbereich wird Öl zur Kühlung und/oder als Schmiermittel verwendet. Beim Betrieb eines Motors treten dann Durchblasegase, sogenannte Blow-by-Gase, aus dem Brennraum über den Bereich zwischen Kolben beziehungsweise Kolbenringen (Kolbenringstoßspalte) und Zylinder in den Kurbelraum. Diese Blow-by-Gase tragen neben unverbrannten Kraftstoffanteilen auch Öl, beispielsweise in Form von Öltropfen oder Ölnebel, mit sich.

In den Anfangsjahren des Motorenbaus wurden Motoren entlüftet, in dem die mit Öl beladenen Blow-by-Gase unbehandelt in die Atmosphäre geleitet wurden. Aufgrund der schädlichen Bestandteile der Blow-by-Gase und der gesetzlichen Vorschriften werden heutzutage kontrollierte geschlossene Kurbelgehäuseentlüftungssysteme verwendet, bei welchen die gereinigten Blow-by-Gase dem Ansaugsystem des Motors wieder zugeführt werden.

Diese Abgasrückführung dient auch der Minderung von Stickoxiden (NOₓ), welche bei der Verbrennung entstehen, in den Abgasen. Diese Reduktion ist nötig, um die heute vorgeschriebenen Emissionsgrenzwerte im Kraftfahrzeugbereich, aber auch bei Heizanlagen oder Gasturbinen, einzuhalten.

Um den Ölverbrauch einer Brennkraftmaschine, wie beispielsweise eines Motors, niedrig zu halten, Ablagerungen im Ansaug- und Auspufftrakt der Brennkraftmaschine zu minimieren und eine geringe Schadstoffemission sicher zu stellen, müssen die mit dem Blow-by-Gas mitgeführten Ölpartikel möglichst vollständig aus dem Gasgemisch entfernt werden. Insbesondere die Begrenzung der Schadstoffemission im Zuge der neueingeführten Euro-5 und Euro-6-Norm im Kraftfahrzeugsektor erfordern eine möglichst vollständige Abscheidung des in den Blow-by-Gasen befindlichen Öls.

Für das Entfernen von Ölpartikeln aus Blow-by-Gasen sind unterschiedliche Vorrichtungen im Kraftfahrzeugbereich bekannt. Man kann hier unterschiedliche Anordnungen und Ausführungen von Ölabscheidern unterscheiden, beispielsweise können diese im Zylinderkopf untergebracht sein, im Ventildeckel integriert oder als ein vom Ölraum separierter Beruhigungsraum ausgeführt sein. Eine weitere Möglichkeit ist die Anordnung des Ölabscheiders außerhalb des Motors.

Die Abscheideleistung üblicher Abscheidesysteme ist in der Regel vom Druckverlust abhängig. Dieser Druckverlust, der gleichbedeutend ist mit dem Energiebedarf eines Abscheiders, darf nicht so hoch sein, dass im Kurbelgehäuse bei der Entlüftung der Blow-by-Gase ein zu hoher Überdruck entsteht, mit der Folge, dass unter anderem Öl und Blow-by-Gas in die Umwelt entweichen.

Bei herkömmlichen Ölabscheidern ist die Abscheideleistung daher begrenzt, oder es wird neben der für den Druckverlust zuständigen Strömungsenergie eine zusätzliche Energiequelle benötigt. Beispielhaft seien hier der elektrostatische Abscheider und der Zentrifugalabscheider genannt. Diese Systeme sind in der Regel deutlich aufwändiger als herkömmliche, passive Abscheider, welche im Allgemeinen ein volumenstromabhängiges Abscheide- und Druckverlustverhalten aufweisen. Als Beispiel seien hier geschaltete Zyklonreihen genannt, die mit zunehmendem Volumenstrom aktiviert werden.

Die in Zyklonreihen verwendeten Zyklonabscheider ermöglichen die Trennung von Öl und Gas durch Trägheitskräfte. Mit entsprechend ausgelegten Zyklonabscheidern lassen sich bei einer entsprechenden Druckdifferenz etwa 60 bis 70 % des mit dem Blow-by-Gas mitgeführten Ölnebels abscheiden.

Nachteilig beim Einsatz von entsprechenden Passivabscheidern ist jedoch, dass sich insbesondere bei modernen Otto- und Dieselmotoren die mit hoher Leistungsdichte wegen der zunehmenden Entdrosselung des Luftfilters und des übrigen Ansaugsystems die für die Ölnebelabscheidung nutzbaren Druckdifferenzen zwischen dem Kurbelgehäuse und dem Ansaugtrakt der Brennkraftmaschine immer weiter verringern.

Die Verwendung eines Zyklonabscheiders zur Bereitstellung von luftfreiem Schmieröl ist beispielsweise in DE 36 232 38 C2 beschrieben. Ein Luft-Öl-Gemisch wird hier in den Zyklonascheider eingeleitet und unter Nutzung eines Teils der Öldruckenergie erfolgt die Trennung in einen luftarmen und lufthaltigen Teilstrom.

Eine Einrichtung zur Entlüftung des Kurbelgehäuses einer Brennkraftmaschine ist in EP 1 798 388 A2 beschrieben. Auch hier wird die Gasströmung vom Kurbelgehäuse in Richtung zum Ansaugtrakt genutzt, um eine wirksame Ölnebelabscheidung zu erhalten.

Ein Herausfiltern des Öls mit einem klassischen Filter, welcher das Öl aus dem Gasgemisch sammelt, ist vor allem im Kraftfahrzeugbereich nicht sinnvoll. Ein Filter absorbiert üblicherweise das abzuscheidende Material, so dass es zu einer Sättigung des Filters kommt. Anschließend ist entweder die Filterleistung deutlich reduziert und/oder das Trägermaterial, hier das Gasgemisch, kann nicht weiter durchströmen.

So beschreibt EP 0 036 031 A1 ein Verfahren zum Abscheiden von Öl oder ölartigen Substanzen aus Gasen. Hierzu wird das mit der abzuscheidenden Substanz beladene Gas durch ein poröses textiles Flächengebilde, das wenigstens teilweise aus oleophilen Fasern mit einem Einzeltiter unter 1dtex besteht, hindurch geleitet. Die Öltröpfchen im Gas werden von dem Flächengebilde zurückgehalten.

Die Aufgabe der vorliegenden Erfindung liegt somit in einer effizienten Trennung von Öl aus Gasgemischen, ohne einen übermäßig hohen Druckverlust zu erzeugen. Die Trennung sollte möglichst vollständig erfolgen, auch wenn das Öl in Form von Ölnebeln fein verteilt in dem Gasgemisch vorliegt. Eine entsprechende Vorrichtung sollte insbesondere bei Verwendung im Kraftfahrzeugbereich weiterhin wenig Gewicht sowie einen geringen Raumbedarf aufweisen.

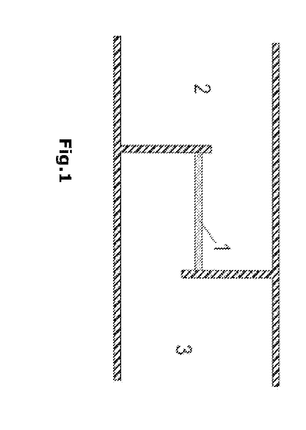

In einer ersten Ausführungsform wird die der vorliegenden Erfindung zugrunde gelegten Aufgabe durch eine Vorrichtung zur Entölung von Gasgemischen gelöst, die dadurch gekennzeichnet ist, dass sie wenigstens ein gasdurchlässiges, einen Ölfilm-tragendes Flächenelement 1 in einem Gasstrom aufweist, welches in der Weise angeordnet ist, dass es einen Bereich 2 hoher Ölkonzentration des Gasgemisches (Rohgasseite) von einem Bereich 3 geringer Ölkonzentration des Gasgemisches (Reingasseite) trennt. Das ölhaltige Gasgemisch, welches beispielsweise aus dem Kurbelgehäuse eines Verbrennungsmotors stammt, strömt aus dem Bereich 2 hoher Ölkonzentration in Richtung des Flächenelements 1. Dieses ist so ausgeführt, dass sich dort die aus dem Bereich 2 hoher Ölkonzentration in den Bereich 3 geringer Ölkonzentration transportierten Ölpartikel abscheiden. Hierdurch bildet sich ein geschlossener Ölfilm auf dem Flächenelement 1 aus. Das Flächenelement 1 fungiert somit als Träger für diesen Ölfilm, vergleichbar mit einem Träger zur Herstellung von Seifenblasen. Fig. 1 zeigt schematisch einen erfindungsgemäßen Aufbau.

Bis zur Ausbildung des geschlossenen Ölfilms auf dem Flächenelement 1 ist die Abscheideleistung (der Filterwirkungsgrad) der erfindungsgemäßen Vorrichtung etwas niedriger. Sobald sich ein geschlossener Ölfilm auf dem Flächenelement 1 gebildet hat, wird die Abscheideleistung maximal und der Druckverlust, also der Druckunterschied zwischen dem Bereich 2 hoher Ölkonzentration und dem Bereich 3 geringer Ölkonzentration, nimmt einen Wert im Bereich von 10 mbar bis 20 mbar, insbesondere von 10 mbar bis 15 mbar an.

Die Abscheidung des Öls aus dem Gasgemisch erfolgt durch Abscheidung von Öl-Tröpfchen auf dem Ölfilm, welcher vom Flächenelement 1 getragen wird. Das Luft-Öl-Gemisch durchdringt den Ölfilm, wodurch sich die feinen Öltröpfchen am Ölfilm abscheiden und diesen gleichzeitig nähren. Auf der Seite des Flächenelements 1, welche zum Bereich 3 der geringen Ölkonzentration weist, bilden sich mit der Zeit größere Öltröpfchen, welche sich dann schwerkraftbedingt vom Flächenelement 1 trennen und auch aufgrund ihrer Größe nicht mit der Strömung mitgerissen werden. Das Öl kann dann, wie beispielsweise im Kraftfahrzeugbereich üblich, über Ölablaufkanäle und/oder Siphone gesammelt werden und einem Ölkreislauf zugeführt werden.

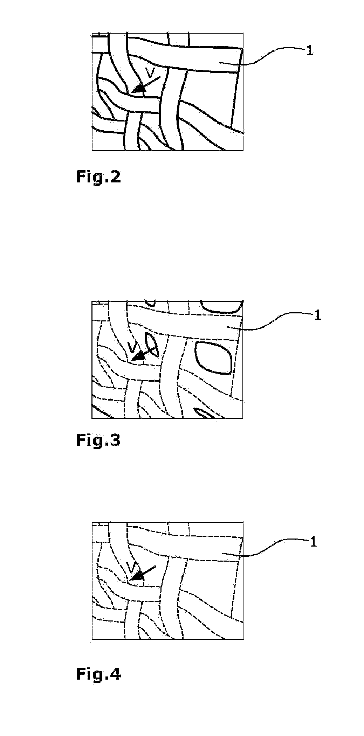

In den Fig. 2 bis 4 ist der Wirkmechanismus einer erfindungsgemäßen Vorrichtung schematisch dargestellt.

Fig. 2 zeigt einen Ausschnitt aus einem erfindungsgemäßen Flächenelement 1. Das Flächenelement 1 ist in Form eines Gewebes dargestellt. Dieses ist in den zu reinigenden Gasstrom eingebracht. Der Vektor des Gasstroms V ist in Form eines Pfeils dargestellt. Betrachtet man den Gasstrom, welcher vom Bereich 2 hoher Ölkonzentration in den Bereich 3 geringer Ölkonzentration strömt, vektoriell, so ergibt sich eine lineare Strömungsrichtung.

Erfindungsgemäß wird nun das Flächenelement 1 zwischen Bereich 2 hoher Ölkonzentration und Bereich 3 geringer Ölkonzentration so eingesetzt, dass es mit dem Vektor V der Strömungsrichtung des Gasstroms einen Winkel im Bereich von größer 0° bis kleiner 180° einschließt.

Das Ölfilm-tragende Flächenelement 1 weist eine offenmaschige, offenporige und/oder offenzellige Struktur auf, durch welche das Gasgemisch durchströmen kann. Strömt das Öl-beladene Gas aus dem Bereich 2 hoher Ölkonzentration erstmals durch das noch unbenetzte Flächenelement 1, wie in Fig. 2 dargestellt, sind Druckverlust und Ölabscheidung minimal.

Strömt das Öl-beladene Gas aus dem Bereich 2 hoher Ölkonzentration durch das Flächenelement 1, wird zunächst die Oberfläche des Flächenelements 1 mit Öl benetzt. In Fig. 3 ist diese Situation dargestellt. Die mit Öl benetzten Fasern des Flächenelements 1 sind durch unterbrochene Linien dargestellt. Der Ölfilm ist zu Beginn noch nicht geschlossen; er weist noch Öffnungen auf, welche in Fig. 3 mit einer durchgezogenen Linie dargestellt sind.

Strömt das Öl-beladene Gas nun weiter durch das Flächenelement 1, so kommt es zur Ausbildung eines geschlossenen Ölfilms. Sobald der Ölfilm geschlossen ist, sind die Abscheideleistung und der Druckverlust maximal. Die Zeit bis zur erstmaligen Ausbildung des geschlossenen Ölfilms bezeichnet man als Einlaufphase. Fig. 4 zeigt einen geschlossenen Ölfilm auf dem Flächenelement 1. Auch hier ist das Flächenelement 1 mit einer unterbrochenen Linie dargestellt, um zu verdeutlichen, dass dieses vom Ölfilm vollständig bedeckt ist. Auch zwischen den dargestellten Fasern des Flächenelements 1 befindet sich ein vollständig geschlossener Ölfilm. Das erfindungsgemäße Flächenelement 1 fungiert als Träger für den geschlossenen Ölfilm.

Im Betrieb strömt das Öl-beladene Gas aus dem Bereich 2 hoher Ölkonzentration und trifft auf das Flächenelement 1. Dieses trägt einen geschlossenen Ölfilm, durch welchen das Gas strömt. In diesem Film scheiden sich auch kleinste Öltröpfchen ab; das Gas strömt gereinigt in den Bereich 3 geringer Ölkonzentration. Die Abscheidung des Öls aus dem Gas erfolgt am geschlossenen Ölfilm.

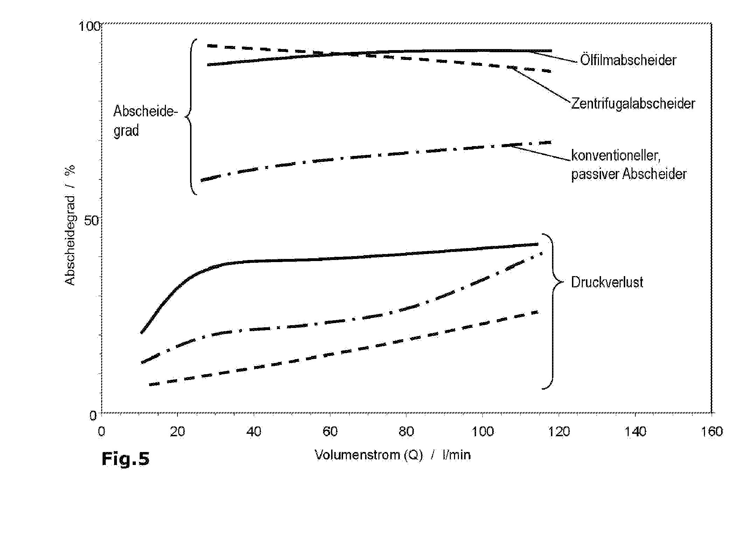

Ein Vergleich der Abscheideleistungen unterschiedlicher Filtersysteme zeigt Fig. 5. Dargestellt ist der Abscheidegrad unterschiedlicher Entölungsmethoden. Der Abscheidegrad ist der Anteil des im Gasgemisch enthaltenen Öls, welcher abgeschieden wird. Die Angabe erfolgt in %. Weiterhin ist für unterschiedliche Filter der Verlauf des Druckverlusts dargestellt. Dieser sollte möglichst optimal sein.

Mit dem erfindungsgemäßen Ölabscheider ist es möglich, einen hohen Abscheidegrad zu erhalten. Mit einem Zentrifugalabscheider ist es möglich, eine ähnlich effektive Entölung von Gasgemischen zu erhalten. Der Druckverlust ist bei der Verwendung von Zentrifugalabscheidern geringer als beim Einsatz der erfindungsgemäßen Ölfilmabscheiders.

Konventionelle passive Abscheider führen gegenüber dem erfindungsgemäßen Ölfilmabscheider zu einem geringeren Druckverlust. Zudem weisen sie einen geringeren Abscheidegrad auf.

Das Ölfilm-tragende Flächenelement 1 weist eine offenmaschige, offenporige und/oder offenzellige Struktur auf. Bereits bei einer Porengröße von 400 µm erfolgt die Ausbildung eines geschlossenen Ölfilms auf dem Flächenelement 1. Entsprechende offenporige Materialien sind beispielsweise bei der Herstellung von Polstern aus polymeren Schäumen bekannt. Liegt die Größe der Poren über 400 µm, kann die Ausbildung eines geschlossenen Ölfilms nicht gewährleistet werden. Durch das durchströmende Gasgemisch können dann auch Ölpartikel aus dem Ölfilm herausgezogen werden, wodurch sich eine geringere Abscheideleistung ergibt.

Die Porengröße kann beispielsweise im Bereich von 5 µm bis 400 µm liegen. In diesem Bereich kann die Ausbildung eines geschlossenen Ölfilms und somit eine hohe Abscheidungleistung des Öls sichergestellt werden. Gleichzeitig kann das Gasgemisch ungehindert durchströmen. Bei dieser Porengröße bildet sich bereits nach kurzer Zeit ein geschlossener Ölfilm auf dem Flächenelement 1 aus, wodurch die Abscheideleistung von Öl aus dem Gasgemisch maximal wird. Gleichzeitig wird eine ausreichende Gasdurchlässigkeit sichergestellt, wodurch der Druckverlust im Bereich von 10 mbar bis 20 mbar, insbesondere von 10 mbar bis 15 mbar bei vollständiger Benetzung des Flächenelements 1 mit Öl gehalten werden kann. Die Einlaufphase ist abhängig vom Querschnitt des Flächenelements 1. Wichtig ist, dass nach erstmaliger Einlaufphase, die ca. 1 min bis 4 min dauert, diese wesentlich verkürzt wird. Nach wenigen Sekunden ist die volle Funktionalität gewährleistet.

Erfindungsgemäß umfasst das Ölfilm-tragende Flächenelement 1 vorzugsweise ein oleophiles Material. Hierdurch wird die Benetzung durch die im Gasgemisch enthaltenen Öltropfen sichergestellt. Wichtig ist hier, dass kein abperlender Effekt, wie dies durch den Lotusblüteneffekt bekannt ist, auftritt. Das oleophile Material des Flächenelements 1 sollte vielmehr durch das Öl gut benetzt werden.

Eine vollständige Absorption findet nie, auch nicht bei einem klassischen Filter, statt; das Öl wird mit der Zeit, wenn ein Filter vollständig gesättigt ist, ebenfalls auf der Reingasseite austreten. Ausschlaggebend ist, dass bei einem klassischen Filter dieser Zustand nie erreicht werden darf, da sonst der Druckverlust zu hoch ist.

Das erfindungsgemäße Flächenelement 1 entfaltet seine Wirkung aber erst dann, wenn das Material gesättigt ist und sich praktisch ein geschlossener Ölfilm gebildet hat.

Eine offenmaschige, offenporige und/oder offenzellige Struktur, wie sie das erfindungsgemäße Flächenelement 1 aufweist wird beispielsweise durch eine gitterartige Struktur, eine Gewebestruktur, eine Vliesstruktur oder einen Schaum ermöglicht. Schaumartige offenporige Strukturen umfassen hier beispielsweise polymere Schäume oder Keramikschäume. Beispielsweise umfasst das Ölfilm-tragende Flächenelement 1 eine offenporige Struktur aus Polyamid-(Nylon).

Durch eine erfindungsgemäße Vorrichtung mit einem Ölfilm-tragenden Flächenelement 1 kann ein hoher Anteil von Öl aus einem Gasgemisch entfernt werden. Während der Aufbauphase, also dem Zeitraum, bis zu dem sich ein vollständiger Ölfilm auf dem Flächenelement 1 aufgebaut hat, ist der Druckverlust, also der Druckunterschied zwischen Bereich 2 hoher Ölkonzentration und Bereich 3 geringer Ölkonzentration, minimal. In dieser Phase wird noch nicht die maximale Abscheideleistung erreicht. Sobald sich ein geschlossener Ölfilm auf dem Flächenelement 1 gebildet hat, wird die Abscheideleistung maximal und der Druckverlust nimmt einen Wert im Bereich von 10 mbar bis 20 mbar, insbesondere von 10 mbar bis 15 mbar an. Die Abscheideleistung einer erfindungsgemäßen Vorrichtung beträgt wenigstens 90%; insbesondere ist eine Abscheideleistung von 95 % möglich. Die Abscheideleistung gibt den Anteil an Öl an, der aus dem Gasstrom entfernt wurde.

Eine solche Effizienz ist mit herkömmlichen Systemen, wie beispielsweise Zentrifugen oder Zyklonen nur schwer erreichbar. Zudem benötigen solche Zentrifugalabscheider einen deutlich höheren Herstellungsaufwand und auch einen größeren Bauraum als der Abscheider der vorliegenden Erfindung. Die Abscheideleistung ist stark von der Tröpfchengrößenverteilung im Blowby-Gas abhängig. Herkömmliche Systeme, wie zum Beispiel Zyklone, scheiden unter akzeptablem Druckverlust Tröpfchengrößen ab 1 µm gut ab. Da die heutigen Motoren immer mehr, zum Beispiel durch Turbolader, aufgeladen werden, verschiebt sich die mittlere Tröpfchenverteilung im Rohgas (Blowby-Gas) hin zu Tröpfchengrößen von 0,5 µm. Herkömmliche Abscheider haben bei dieser Tröpfchengröße eine Effizienz von ca. 30%. Es können also nur 30% der Tröpfchen mit dieser Größe abgeschieden werden. Die erfindungsgemäße Vorrichtung weist hier eine Abscheideleistung von ca. 70 % und mehr auf.

Das Ölfilm-tragende Flächenelement 1 der vorliegenden Erfindung ermöglicht daher bei geringem Gewicht und geringem Platzbedarf eine effiziente Abscheidung von Öl aus einem Gasgemisch. Da die eigentliche Ölabscheidung durch den sich auf dem Flächenelement 1 ausbildenden Ölfilm erreicht wird, ist die Dicke des Flächenelements 1 im Vergleich zu seiner Fläche sehr gering. Vorzugsweise betragen die Schichtstärken des Flächenelements 1 beispielsweise 0,3 bis 0,8 µm.

In einer weiteren Ausführungsform betrifft die vorliegende Erfindung ein Verfahren zur Abscheidung von Öl aus einem Gasgemisch mit Hilfe einer zuvor beschriebenen Vorrichtung. Hierbei kann das schwerkraftbedingt vom Ölfilm-tragenden Flächenelement 1 nach unten tropfende Öl über Ablaufkanäle und/oder Siphone eingesammelt werden. Dies ermöglicht die Rückführung des Öls und die Möglichkeit der Wiederverwertung, beispielsweise im Sinne einer Rückführung in ein Ölkreislaufsystem.

Die vorliegende Erfindung betrifft weiterhin die Verwendung einer zuvor beschriebenen Vorrichtung zur Abscheidung von Ölpartikeln aus Kurbelgehäuseentlüftungsgasen. Die Funktion kann beispielsweise durch ein Legen des Flächenelements 1 in einen bestehenden Fügeprozess zur Herstellung der Kurbelgehäuseentlüftung gebildet werden. Eine weitere Möglichkeit ist die Verwendung des Flächenelements 1 als Modul um einen Austausch im Servicefall zu gewährleisten.

Des Weiteren besteht die Möglichkeit dieses Flächenelement 1 in Kombination mit an sich bekannten geschalteten Abscheidesystemen einzusetzen. Der Ölfilmträger wird hierbei parallel oder seriell mit herkömmlichen Abscheidesystemen geschaltet um die Funktion für bestimmte Sonderzustände eines Verbrennungsmotors sicherzustellen. Kraftfahrzeuge können einfach nachgerüstet und somit deren Schadstoffemission entsprechend gesenkt werden. Mit einer solch hohen Abscheideleistung wird auch die Einstufung eines Kraftfahrzeugs, welches ein erfindungsgemäßes Flächenelement 1 aufweist, in die Euro-5 und sogar die Euro-6 Norm ermöglicht.

Die vorliegende Erfindung ermöglicht damit eine hohe Abscheideleistung von Ölen, auch in Form von Ölnebeln, aus einem Gasgemisch, beispielsweise aus Kurbelgehäuseentlüftungsgasen, bei geringem Herstellungsaufwand, geringem Gewicht und wenig Platzbedarf.

### Bezugszeichenliste:

1: Ölfilm-tragendes Flächenelement
2: Bereich hoher Ölkonzentration des Gasgemisches (Rohgasbereich)
3: Bereich geringer Ölkonzentration des Gasgemisches (Reingasbereich) V: Vektor des Gasstroms

## Patentansprüche

1. Vorrichtung zur Entölung von Gasgemischen, **dadurch gekennzeichnet, dass** wenigstens ein gasdurchläsiges, einen Ölfilm-tragendes Flächenelement (1) einen Bereich (2) hoher Ölkonzentration des Gasgemisches von einem Bereich (3) geringer Ölkonzentration des Gasgemisches trennt.

2. Vorrichtung gemäß Anspruch 1, **dadurch gekennzeichnet, dass** das Ölfilm-tragendes Flächenelement (1) eine offenmaschige, offenporige und/oder offenzellige Struktur aufweist.

3. Vorrichtung gemäß Anspruch 1 oder 2, **dadurch gekennzeichnet, dass** das die Porengröße des Ölfilm-tragenden Flächenelements (1) im Bereich von 5 µm bis 400 µm liegt.

4. Vorrichtung gemäß einem der Ansprüche 1 bis 3, **dadurch gekennzeichnet, dass** die Porengröße des Ölfilm-tragenden Flächenelements (1) 10 µm beträgt.

5. Vorrichtung gemäß einem der Ansprüche 1 bis 4, **dadurch gekennzeichnet, dass** das Ölfilm-tragende Flächenelement (1) ein oleophiles Material umfasst.

6. Vorrichtung gemäß einem der Ansprüche 1 bis 5, **dadurch gekennzeichnet, dass** das Ölfilm-tragende Flächenelement (1) eine gitterartige Struktur, eine Gewebestruktur, eine Vliesstruktur oder einen Schaum, insbesondere einen polymeren Schaum oder einen Keramik-Schaum, umfasst.

7. Vorrichtung gemäß einem der Ansprüche 1 bis 5, **dadurch gekennzeichnet, dass** das Ölfilm-tragende Flächenelement (1) eine offenporige Struktur aus Polyamid umfasst.

8. Vorrichtung gemäß einem der Ansprüche 1 bis 7, **dadurch gekennzeichnet, dass** das Ölfilm-tragende Flächenelement (1) mit dem Vektor der Strömungsrichtung des zu reinigenden Gasgemisches einen Winkel im Bereich von größer 0° bis kleiner 180° einschließt.

9. Vorrichtung gemäß einem der Ansprüche 1 bis 8, weiterhin umfassend Ablaufkanäle und/oder Siphone zum Sammeln des vom Ölfilm-tragenden Flächenelements (1) im Bereich (3) der geringen Ölkonzentation.

10. Verfahren zur Abscheidung von Öl aus einem Gasgemisch unter Einsatz einer Vorrichtung gemäß einem der Ansprüche 1 bis 9.

11. Verfahren gemäß Anspruch 10, **dadurch gekennzeichnet, dass** man das schwerkraftbedingt vom Ölfilm-tragenden Flächenelement (1) nach unten tropfende Öl über Ablaufkanäle und/oder Siphone einsammelt und wiederverwertet.

12. Verwendung einer Vorrichtung gemäß einem der Ansprüche 1 bis 11 zur Abscheidung von Ölpartikeln aus KurbelgehäuseEntlüftungsgasen.
